# NEW EUROPEAN PATENT SPECIFICATION

(11) **EP 1 196 704 B2**
(45) Date of publication and mention of the opposition decision: **20.01.2010**
(45) Mention of the grant of the patent: 29.12.2004
(21) Application number: 00931046.7
(22) Date of filing: 07.06.2000
(51) Int. Cl.: F16J 15/32

(54) **A SEALING ARRANGEMENT AND A SEALING MEMBER THEREFOR**
DICHTUNGSANORDNUNG UND DICHTUNGSELEMENT DAFÜR
DISPOSITIF D'ETANCHEITE ET ELEMENT D'ETANCHEITE POUR CE DISPOSITIF

(30) Priority: 08.06.1999 DK 80999; 03.04.2000 DK 200000551
(43) Date of publication of application: 17.04.2002
(73) Proprietor: Trelleborg Sealing Solutions Denmark A/S, DK-3000 Helsingor (DK)
(72) Inventor: IVERSEN, Gert, DK-3000 Helsingor (DK)
(74) Representative: Plougmann & Vingtoft A/S
(86) International application number: PCT/DK2000/000305
(87) International publication number: WO 2000/075539

(56) References cited:
- EP-A- 0 418 732
- EP-A- 0 521 227
- WO-A-91/10088
- WO-A-92/15807
- DE-A- 2 325 000
- DE-A- 3 026 063
- DE-A- 3 835 505
- DE-C- 3 521 525
- DE-U- 7 831 410
- US-A- 1 490 716
- US-A- 5 249 813

## Description

The present invention relates to a sealing arrangement for sealing a space, which extends between high and low pressure areas and which is defined between a first apparatus part and a cylindrical surface of a second apparatus part, the first and second apparatus parts being mutually reciprocatingly movable along the axis of said cylindrical surface.

As an example, the apparatus part may be part of a housing or a cylinder, and the second apparatus part may be a piston rod connected to a double acting piston. A sealing arrangement of this type is disclosed for example in WO 92/15807. This known sealing arrangement comprises an annular sealing member of resilient material and a compression ring, such as an O-ring, surrounding the annular sealing member. The radially outer peripheral surface of the annular sealing member extends between axially opposite first and second end surfaces facing said high and low pressure areas, respectively. The annular sealing member also has a radially inner peripheral surface for sealing engaging with the cylindrical surface of the second apparatus part at a contact area thereof. The purpose of the compression ring is to press the contact area of the inner peripheral surface of the sealing member into tight sealing engagement with the cylindrical surface of the second apparatus part. This means that ideally the annular contact area between the compression ring and the outer peripheral surface of the annular sealing member should be positioned radially opposite to the contact area between the sealing member and the cylindrical surface of the second apparatus part.

In actual practice, however, the pressure difference between the high and low pressure areas is varying substantially, and an increasing pressure difference tends to force the compression ring and, consequently, also the contact area between the compression ring and the annular sealing member in a direction towards the low pressure area. In order to substantially maintain the sealing pressure between the contact area of the inner peripheral surface part of the sealing member and the cylindrical surface of the second apparatus part when the compression ring is forced towards the low pressure area the outer peripheral surface of the sealing member is chamfered at its low pressure end.
Thus, the annular sealing member of the known sealing arrangement has an outer peripheral surface defining an obtuse angle in an axial sectional view.

It has been found that the compression ring, which may, for example, be an O-ring made from an elastomeric material, has a relatively short useful lifetime, because eventually the compression ring becomes permanently deformed.

The present invention provides a sealing arrangement of the type disclosed in DE-C-3 521 525, US-A-5.249.813, and US-A-1.490.716 having an increased efficiency and a prolonged useful economic lifetime.

EP 0 521 227A1 discloses a sealing arrangement with an annular sealing member. The sealing arrangement has the features of the preamble of claim 1 and its annular sealing member has the features of the preamble of claim 15. However, the axial sectional view of the outer peripheral surface of the annular sealing member has rectilinear or a concave contour consisting of two rectilinear portions.

Thus, the present invention provides a sealing arrangement defined in claim 1.

It has been found that in the known sealing arrangements the efficiency of the compression means which may comprise a compression ring is eventually reduced because during operation the compression ring is pressed into contact with a rather sharp annular edge defined by the outer peripheral surface of the sealing member and corresponding to the vertex of the said obtuse angle. It has been found that the useful lifetime of the sealing arrangement according to the invention is substantially prolonged compared with the lifetime of the known sealing arrangements when the convex contour of the outer peripheral surface of the annular sealing member is rounded as described above.

The radius or curvature of such roundings preferably does not exceed twice the total axial length or width of the annular sealing member, and in the presently preferred embodiment the radius of radii of curvature is/are at least 0.6 and preferably about 0.85 x the total axial length of the annular sealing member.

The convex contour of the outer peripheral surface of the sealing member may extend along the total axial length or width of the seating member. However, when the radial distance between the outer peripheral surface of the sealing member and the cylindrical surface of the second apparatus part is gradually decreasing towards the second end surface of the sealing member or towards the low pressure area, the compression ring may tend to be forced or extruded into the space defined between the second end surface of the sealing member and an adjacent opposite surface of the first apparatus part. In order to counteract such tendency the convex axial sectional contour of the outer peripheral surface part may continuously merge into a concave sectional contour adjacent to the second end surface of the sealing member. In such case the convex contour may merge into the concave contour at an inflexion spaced from said second end surface by a distance being 0.05-0.25 x the total axial length or width of the sealing member. The end part of the sectional contour adjacent to the second end surface of the sealing member and the longitudinal axis of the sealing arrangement preferably defines there between an angle from -10° to +45°. Thus, the said end part of the sectional contour and the longitudinal axis of the sealing arrangement may be converging, but is preferably diverging towards the low pressure area.

The radially inner peripheral surface of the sealing member includes a first section, which extends between the first end surface of the sealing member and the contact area, and which has a minimum diameter substantially exceeding the maximum diameter of the second section of the inner peripheral surface defining said gradually widening or diverging space. Thus, the contacting area is defined as an intermediate part between the first and second sections. Thereby it is secured that the radially inwardly directed pressure applied by the compression ring is concentrated at the predetermined contact area.

The sealing member and the compression ring of the sealing arrangement according to the invention may be retained in their mutual positions in any suitable manner. In the preferred embodiment, however, the annular sealing member and the compression ring are arranged within an annular channel or groove which is formed in the first apparatus part and defines an annular opening opposite to the cylindrical surface of the second apparatus part, said channel having a bottom wall for sealingly engaging with the compression ring, and opposite first and second side walls positioned opposite to the first and second end surfaces, respectively, of the sealing member.

According to a further embodiment of the sealing arrangement the outer peripheral surface of the sealing member may define a convex axial contour having a first section adjacent to the first end surface of the sealing member and a second section adjacent to the second end surface of the sealing member, the first and second end section being interconnected by an intermediate section, and the radial height or width of the cross-section of the annular sealing member may then be maximum at said intermediate section. By suitably selecting the mutual actual positions of the intermediate section of the outer peripheral surface and the contact section of the inner peripheral surface of the sealing member the radial compressive force applied the compressive ring may be optimised so as to obtain an optimum sealing effect. In a preferred embodiment the first section at least along an axial length of from 0.3 to 0.7 x the total axial length of the sealing member measured from said second end surface defines an angle of between 0° and 20° with the longitudinal axis of the sealing member.

According to a second aspect the present invention provides an annular sealing member as defined in claim 17. The axial sectional view of at least part of the outer peripheral surface of the annular sealing member, which is adapted to come into contact with the compression ring, may define such convex contour that in an unstressed condition of the sealing member the radial distance between such part of the outer peripheral surface and the radially innermost part of the inner peripheral surface is decreasing in an axial direction towards the second end surface, the radius or radii of curvature of the convex shape being at least 0.4 x the total axial length or width of the annular sealing member. Because a convex shape does not have sharp edges the useful lifetime of the sealing member and of the compression ring co-operating therewith is extended.

WO 92/15807 discloses a sealing arrangement comprising an annular sealing member. The sealing member has a radially inner peripheral surface which is divided into three axial sections, namely a first section adjacent to the high pressure area, an intermediate section forming a predetermined contact area, and a second section adjacent to the low pressure area. The first section is defined by a stepped part having an inner diameter substantially exceeding the outer diameter of a cylindrical surface of a second apparatus part or piston rod. The intermediate predetermined contact area is adapted to be in sealing engagement with the outer cylindrical surface of the piston rod, and the second section is a conical surface defining a widening or diverging space together with the outer cylindrical surface of the piston rod. In the known sealing arrangement the borderline between the contact area and the second section of the inner peripheral surface part of the sealing member is defined by an annular edge. However, when the pressure difference exceeds a certain value, for example in the order of 300 bar, and/or when the temperature becomes excessively high the sealing member may tend to tilt about the said edge or to deform such that part of said second section of the inner peripheral surface part of the annular sealing member comes into contact with the outer cylindrical surface of the second apparatus part. This may result not only in a less efficient sealing effect, but also in so-called extrusion damages of the sealing member. These problems are solved by the arrangement according to claim 1.

The said annular compression means may, for example, comprise a compression ring engaging with the radially outer peripheral surface of the seating member. The outer peripheral surface of the annular seating member may have a linear or convex cross-sectional shape. Alternatively, the outer peripheral surface of the sealing member may comprise a concave surface part engaging with a complementary convex surface part of the annular compression means.

The annular compression means may be a compression ring made from an elastomeric material and having a solid cross-section. The compression ring may then be divided into a pair of axially juxtaposed annular members. Alternatively, the compression means may be made from metal. such as a helically wound wire. Furthermore, the annular seating member need not be a single uniform part, but may be divided into two or more parts having mutually engaging complementary surface parts. Such sealing member parts may be separate or bound together and may be made from materials having different characteristics.

According to another embodiment the compression means may be positioned within a pocket, which is defined within the annular sealing member and which opens into said first end surface of the sealing member. As an example, the compression means may then be an annular metal spring member having a U-shaped cross-section tending to open the pocket and thereby expand the cross-section of the sealing member radially.

In the preferred embodiment the radius or radii of curvature is/are within the range of from 0.15 to 1.5, preferably 0.2 to 0.6, and more preferably approximately 0.3 x the total axial length or width of the sealing member. By selecting an axial contour of the inner peripheral surface of the annular sealing member with such predetermined convex, rounded contour improved sealing characteristics may be obtained, especially in case of an excessive pressure difference between the high and low pressure areas and/or at high temperatures.

As mentioned above the inner peripheral surface of the annular sealing member may be divided into three parts each extending along a fraction of the total axial length of the annular sealing member. As an example, the inner surface section defining the widening space and being adjacent to the second end surface of the sealing member preferably does not have an axial length exceeding 0.3 x the total axial length of the sealing member. The contact of area of the inner peripheral surface part is preferably located within the axial length range of from 0.2 to 0.6 x the total axial length of the sealing member measured from said second end surface. Furthermore, this contact area preferably defines a convex, rounded contour with a radius or radii of curvature within the range of from 2 to 5 x the total axial length of the sealing member. The outer peripheral surface of the annular sealing member may be shaped as previously explained.

The invention will now be further described with reference to the drawings, wherein
Fig. 1 is a partial sectional view of a known sealing arrangement,
Fig. 2 is a partial sectional view of a sealing arrangement,
Figs. 3-8 are fragmentary sectional views showing various embodiments of the part of the sealing member indicated by a circle C in Fig. 2,
Fig. 9 is a partial sectional view of a further embodiment of a sealing arrangement,
Figs. 10 and 11 are fragmentary sectional views of various embodiments of the part of the sealing member indicated by the circle C in Fig. 9,
Fig. 12 is a partial sectional view of a still further embodiment of a sealing arrangement,
Figs. 13-15 are fragmentary sectional views showing various embodiments of the part of the sealing arrangement indicated by the circle C in Fig. 13.

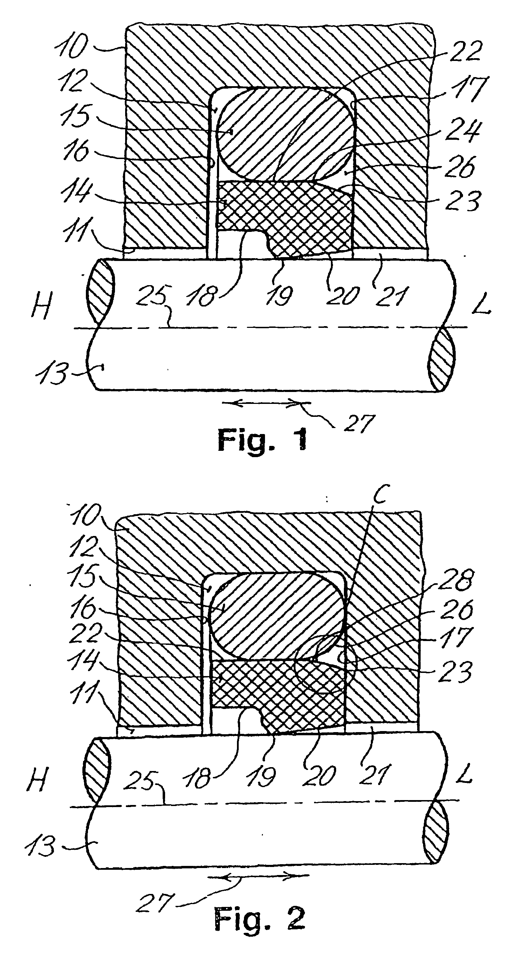

Fig. 1 shows a known sealing arrangement of the type disclosed in WO 92/15807. The sealing arrangement shown in Fig. 1 comprises a housing wall 10 having a through bore 11 formed therein. An annular channel or groove 12 is formed in the housing wall 10 and opens into the bore 11. A cylindrical rod 13, such as a piston rod, extends through the bore 11 and may perform a reciprocating axial movement in relation to the housing wall 10. The bore 11 extends between a high pressure side H and a low-pressure side L. As an example, the rod 13 may be a piston rod having its high pressure end connected to a double acting piston which is arranged within a cylinder (not shown) and the wall 10 may then be part of a cylinder housing.

An annular sealing member or a sealing ring 14 having an inner peripheral surface engaging with the cylindrical outer surface of the piston rod 13 is arranged within the annular channel 12. This channel also contains a compression ring 15, such as an O-ring of an elastomeric material or a ring comprising spring means. The compression ring 15 is surrounding the annular sealing member 14 and is in engagement with the outer peripheral surface thereof so as to press the sealing member 14 radially inwardly into tight sealing contact with the outer surface of the piston rod.

The annular channel 12 is defined between a pair of axially spaced, opposite first and second end walls 16 and 17, respectively, which are positioned adjacent to the high and low pressure sides H and L, respectively. Because the pressure at the high pressure side H is usually much higher than the pressure at the low pressure side the annular sealing member 14 and the compression ring 15 are usually pressed into tight contact with the second end wall 17 as shown in the drawings. The inner peripheral surface of the annular sealing member 14 may be divided into three axial sections, namely a first, stepped section 18 adjacent to the first end surface 16 of the channel 12, an intermediate contact section 19 and a second diverging section adjacent to the second end surface 17 of the channel 12. The first stepped section 18 has an inner diameter substantially exceeding the outer diameter of the piston rod 13, the contact section 19 is pressed into tight sealing engagement with the outer surface of the piston rod 13, and the second, diverging section 20 defines together with the outer surface of the piston rod 12 a space widening or diverging towards the low pressure side L or the second end surface 17 of the channel 12.

The purpose of the sealing arrangement shown is to prevent or counteract leakage of liquid fluid from the high pressure side H to the low pressure side L via the annular space 21 which is defined between the outer cylindrical surface of the piston rod 13 and the inner surface of the bore 11. The purpose of the first stepped section 18 is to obtain the same fluid pressure on the inner and outer side of this axial part of the sealing member 14 so as to some extend balance the influence of the fluid pressure on the high pressure side on the sealing member 14 and the compression ring 15. The fluid pressure on the high pressure side H does, however, tend to force the elastomeric compression ring 15 towards the low pressure side L and to deform the cross-sectional shape of the ring in accordance with the shape of the free space available within the channel 12. Liquid fluid may succeeds in leaking from the high pressure side to the low pressure side and thereby passing the contact section 19 during a pressure stroke in which the piston rod 13 is moving to the right in Fig. 1. However, when the direction of movement of the piston rod is reversed the leaked fluid is moved through a converging space and may succeed to pass the contact section 19, especially when the pressure difference between the high and low pressure side has been substantially reduced.

The radially outer peripheral surface of the annular sealing member 14 may be divided into two axial sections, namely a first section or a contact section 22 usually contacting the compression ring 15, and a second section or pressure relief section 23. In the known embodiment shown in Fig. 1 the axial contour of the outer peripheral surface of the sealing member defines an obtuse angle defining an annular edge 24 of the outer peripheral surface of the sealing member. Furthermore, while the contact section 22 extends substantially parallel with the central axis of the piston rod, the relief section 23 is converging with the axis 25 so as to define a space 26 between the sealing member 14, the compression ring 15 and the second end surface 17 of the channel 12.

During operation the piston rod 13 is reciprocating in relation to the housing or wall 10 and the pressure difference between the high-pressure side H and the low-pressure side L is varying considerably. Therefore, deformation of the elastomeric compression ring or O-ring is varying all the time so that the available space 26 is more or less filled out by the compression ring. Because of the chamfer defined by the pressure relief section 23 the radially inwardly directed pressure applied to the sealing member 14 by the compression ring 15 is concentrated substantially opposite to the contact section 19 even when the compression ring 15 is pressed into the free space 26. It has been found, however, that the compression ring 15 has to be replaced relatively frequently in order to maintain the sealing characteristics of the sealing arrangement. This is probably due to the relative movements of the sealing member 14 and the compression ring 15 around the annular edge 24 between the contact section 22 and the relief section 23 of the outer peripheral surface of the sealing member 14.

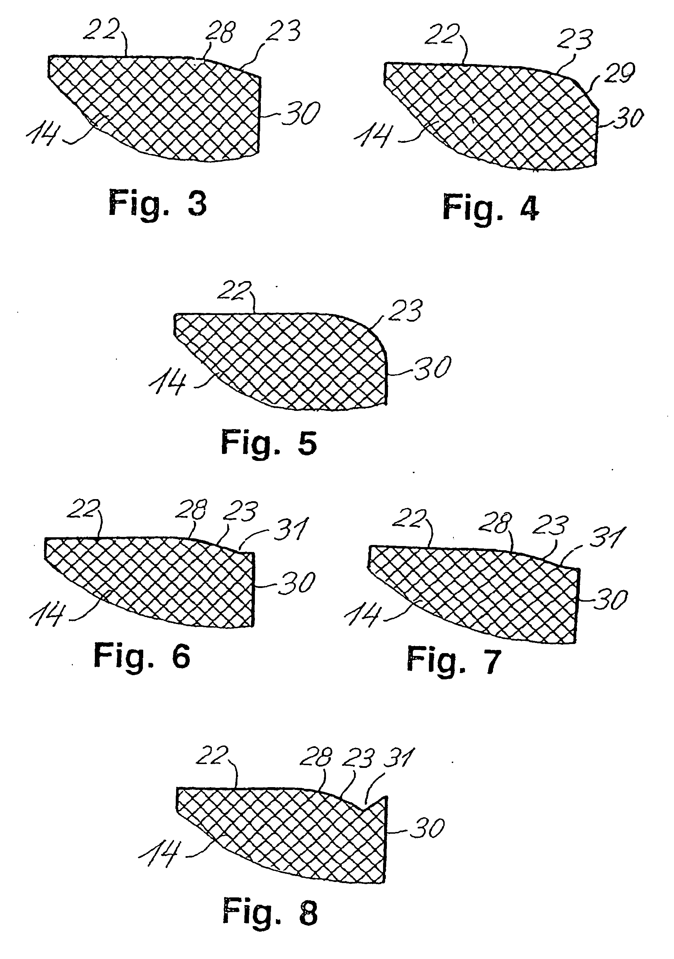

Fig. 2 shows an embodiment of the sealing arrangement according to the invention which corresponds to the known arrangement described above with reference to Fig. 1 with the exception that the shape of the outer peripheral surface of the sealing member 14 has been modified in the area indicated by a circle C in Fig. 2. In Fig. 3 the annular edge 24 has been replaced by a rounded convex contour 28 having a radius of curvature being approximately 0.85 × 1, where I is the total axial length of the sealing member 14. In the embodiment shown in Fig. 4 the relief section 23 defines a rounded contour terminating into a chamfered part 29. Fig. 5 shows an embodiment in which the contour of the pressure relief section 23 is an arc of a circle interconnecting the contact section 22 and the end surface 30 of the sealing member 14 which is in abutment with the second end surface 17 of the channel 12. Figs. 6-8 show embodiments in which the convex contour defined by the section 22 and 23 merges into a concave section 31 adjacent to the end surface 30. In Figs. 6 and 7 the convex contour 28 merges into the concave section 31 such that the tangent inclination changes gradually. In Fig. 8, however, the concave section 31 defines an acute angle.

In a sealing arrangement of the type shown in Fig. 2 having an annular sealing member 14 shaped in accordance with any of Figs. 3-8 the useful life of the compression ring 15 is substantially prolonged and the sealing efficiency of the sealing arrangement is improved.

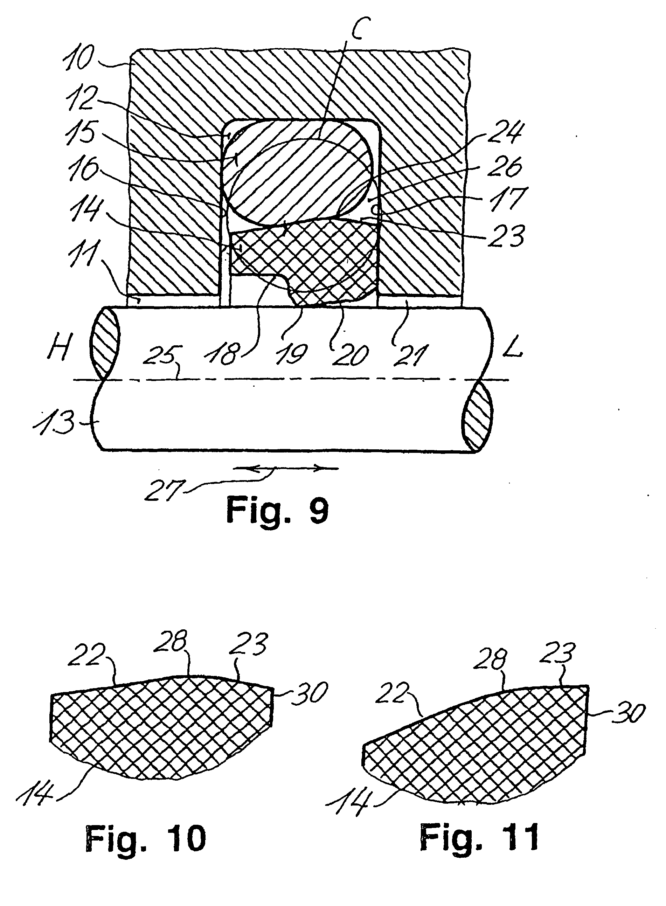

Fig. 9 shows an embodiment corresponding to the embodiment shown in Fig. 2. The only difference is found in the shape of the outer peripheral surface of the sealing member 14. The sealing member 14 of Fig. 9 is also shown in Fig. 10. The sealing member 14 shown in Figs. 9 and 10 differs from that shown in Fig. 2 by the fact that in Figs. 9 and 10 the contact surface 22 as well as the pressure relief section 23 define acute angles with the longitudinal axis 25 of the piston rod 13 while the contact section 22 is substantially parallel with the axis 25 in the embodiment shown in Fig. 2. In Fig. 10 the maximum radial thickness or height of the sealing member 14 is found intermediate of the contact section 22 and the relief section 23. However, in the embodiment shown in Fig. 11 the radial thickness or height of the sealing member 14 is gradually increasing towards the end surface 30.

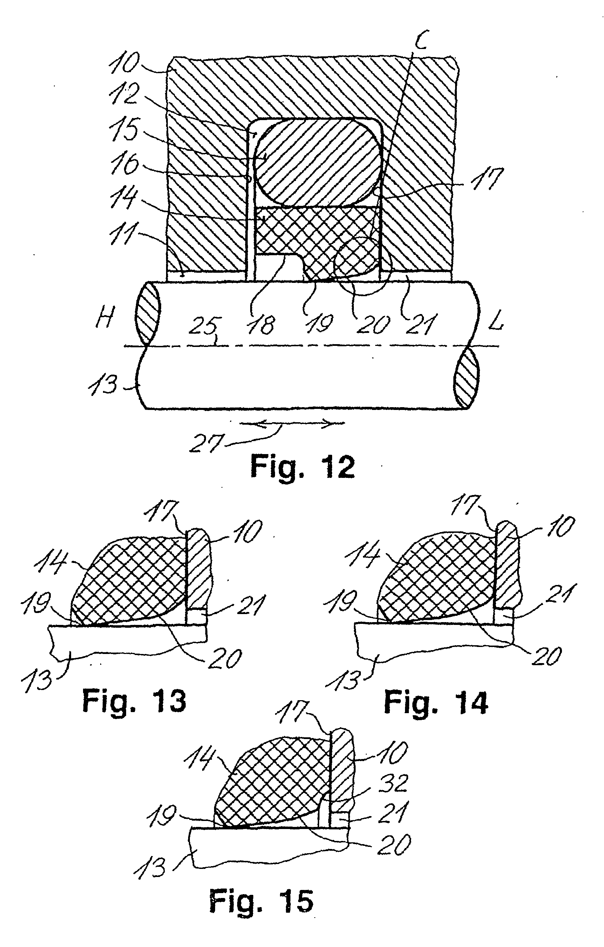

In the embodiment shown in Fig. 12 the outer peripheral surface of the sealing member 14 is shown as a circular cylindrical surface. It should be understood, however, that this surface could have any of the shapes shown in Figs. 3-8, 10 and 11. In the embodiment shown in Fig. 12 the contour of the diverging section 20 of the inner peripheral surface of the sealing member 14 has a convex rounded contour selected so as to improve the sealing characteristics of the sealing member. In the embodiment shown in Figs. 13 and 14 the axial contour of the diverging section 20 is totally convex. In the embodiment shown in Fig. 15, however, the convex diverging section 20 merges into a concave section 32 which reduces the risk of extrusion of the material of the sealing member 14 into the space 21.

## Claims

1. A sealing arrangement for sealing a space, which extends between high and low pressure areas (H,L) and which is defined between a first apparatus part (10) and a cylindrical surface of a second apparatus part (13), the first and second apparatus parts (10, 13) being mutually reciprocatingly moveable along the axis (25) of said cylindrical surface, said sealing arrangement comprising:
an annular sealing member (14) of resilient material having a radially outer peripheral surface (22, 23) extending between axially opposite first and second end surfaces facing said high and low pressure areas (H, L), respectively, and a radially inner peripheral surface (18-20) for sealingly engaging with the cylindrical surface of the second apparatus part (13) at a contact area (19), said inner surface including a first section (18), which extends between the first end surface of the sealing member and the contact area (19), and a second section (20) for defining with the cylindrical surface a first space extending between the contact area (19) and the second end surface (30) of the sealing member (14) and widening from said contact area towards the low pressure area (L), the first section (18) having a minimum diameter substantially exceeding the maximum diameter of the second section, the axial sectional view of said inner peripheral second surface section (20) defining a convex, rounded contour with a radius or radii of curvature within the range of from 0.15 to 1.5 x the total axial length of the sealing member (14) and being selected so as to improve the sealing characteristics of the sealing member (14), and
an annular compression ring (15) engaging with the radially outer peripheral surface of the sealing member (14) for pressing the inner peripheral surface (18-20) of the sealing member (14) into close contact with the cylindrical surface of the second apparatus part (13) at said contact area (19),
**characterized in that** the axial sectional view of at least the part of the radially outer peripheral surface coming into contact with the compression ring (15) has a contact section (22) and a relief section (23) and a section (28) having a rounded convex contour between the contact section (22) and the relief section (23), and at least one of the contact surface (22) and the pressure relief section (23) defines an acute angle with the longitudinal axis of the sealing member.

2. A seating arrangement according to claim 1, wherein the annular compression means comprises a compression ring (15) engaging with the radially outer peripheral surface of the sealing member (14).

3. A sealing arrangement according to claim 1 or 2, wherein the outer peripheral surface of the annular sealing member comprises a concave surface part engaging with a complementary convex surface part of the annular compression means.

4. A sealing arrangement according to any of the claims 1-3, wherein the radius or radii of curvature of the inner peripheral second surface section (20) is/are within the range of from 0.2 to 0.6 x the total axial length of the sealing member (14).

5. A sealing arrangement according to claim 4, wherein the radius of curvature is approximately 0.3 x the total axial length of the sealing member (14).

6. A sealing arrangement according to any of the claims 1-5, wherein the contact area (19) is located within the axial length range of from 0.2 to 0.6 x the total axial length of the sealing member (14) measured from said second end surface (30).

7. A sealing arrangement according to any of the claims 1-6, wherein the axial sectional view of the contact area (19) of the inner peripheral surface defines a convex, rounded contour with a radius or radii of curvature within the range of from 2 to 5 x the total axial length of the sealing member (14).

8. A sealing arrangement according to any of the claims 1-7, wherein the widening space defined by the inner second surface section (20) with the rounded contour extends from the second end surface (30) along an axial length not exceeding 0.3 x the total axial length of the sealing member.

9. A sealing arrangement according to any of the claims 2-8, wherein the axial sectional view of at least part of the outer peripheral surface (22-24) of the annular sealing member (14) coming into contact with the compression ring (15) defines such convex contour that in an unstressed condition of the sealing member the radial distance between such part of the outer peripheral surface and the radially innermost part of the inner peripheral surface is decreasing in an axial direction towards the second end surface (30) and the low pressure area (L), the radius or radii of curvature of the convex contour being at least 0.4 x the total axial length or width of the annular sealing. member.

10. A sealing arrangement according to claim 9, wherein the radius or radii of curvature is/are at least 0.6 and preferably about 0.85 x the total axial length of the annular sealing member (14).

11. A sealing arrangement according to claim 9 or 10, wherein the convex axial sectional contour of the outer peripheral surface part continuously merges into a concave sectional contour (31) adjacent to the second end surface (30) of the seating member (14).

12. A sealing arrangement according to claim 11, wherein the convex contour merges into the concave contour at an inflexion spaced from said second end surface (30) by a distance being 0.05 - 0.25 x the total axial length or width of the sealing member (14).

13. A sealing arrangement according to claim 11 or 12, wherein an end part of the sectional contour adjacent to the second end surface (30) of the sealing member (14) and the longitudinal axis (25) of the sealing arrangement defines there between an angle of from -10° to + 45°.

14. A sealing arrangement according to any of the claims 11-13, wherein the annular sealing member (14) and the compression ring (15) are arranged within an annular channel or groove (12), which is formed in the first apparatus part (10) and defines an annular opening opposite to the cylindrical surface of the second apparatus part (13), said channel having a bottom wall for sealingly engaging with the compression ring and opposite first and second side walls (16, 17) positioned opposite to the first and second end surfaces, respectively, of the sealing member (14).

15. An annular sealing member (14) of resilient material for sealing a space, which extends between high and low pressure areas (H, L) and which is defined between a first apparatus part (10) and a cylindrical surface of a second apparatus part (13), the first and second apparatus parts being mutually reciprocatingly moveable along the axis (25) of said cylindrical surface, said sealing member having a radially outer peripheral surface (22, 23) extending between axially opposite first and second end surfaces facing said high and low pressure areas (H,L), respectively, and a radially inner peripheral surface (18-20) for sealingly engaging with the cylindrical surface of the second apparatus part (13) at a contact area (19), said inner surface including a first section (18), which extends between the first end surface of the sealing member and the contact area (19), and a second section (20) for defining with the cylindrical surface a first space extending between the contact area (19) and the second end surface (30) of the sealing member (14) and widening from said contact area towards the low pressure area (L), the first section (18) having a minimum diameter substantially exceeding the maximum diameter of the second section (20), the axial sectional view of said inner peripheral second surface section (20) defining a convex, rounded contour with a radius or radii of curvature within the range of from 0,15 to 1,5 x the total axial length of the sealing member (14) and being selected so as to improve the sealing characteristics of the sealing member (14),
**characterized in that** the axial sectional view of the radially outer peripheral surface is adapted for coming into contact with a compression ring (15) and has a contact section (22) and a relief section (23) and a section (28) having a rounded convex contour between the contact section (22) and the relief section (23), and at least one of the contact surface (22) and the pressure relief section (23) defines an acute angle with the longitudinal axis of the sealing member.

16. A sealing member according to claim 15, wherein the radius or radii of curvature of the inner peripheral second surface section (20) is/are within the range of from 0.2 to 0.6 x the total axial length of the sealing member (14).

17. A sealing member according to claim 16, wherein the radius of curvature is approximately 0.3 x the total axial length of the sealing member (14).

18. A sealing member according to any of the claims 15-17, wherein the contact area (19) is located within the axial length range of from 0.2 to 0.6 x the total axial length of the sealing member (14) measured from said second end surface (30).

19. A sealing member according to any of the claims 15-18, wherein the axial sectional view of the contact area (19) of the inner peripheral surface defines a convex, rounded contour with a radius or radii of curvature within the range of from 2 to 5 x the total axial length of the sealing member (14).

20. A sealing member according to any of the claims 16-19, wherein the widening space defined by the inner second surface section (20) with the rounded contour extends from the second end surface (30) along an axial length not exceeding 0.3 x the total axial length of the sealing member (14).

21. A sealing member according to any of the claims 15-20, wherein the axial sectional view of at least part of the outer peripheral surface of the annular sealing member (14) being adapted to come Into come into contact with a surrounding compression ring (15) defines such convex contour that in an unstressed condition of the sealing member the radial distance between such part of the outer peripheral surface and the radially innermost part of the inner peripheral surface is decreasing in an axial direction towards the second end surface (30) and the low pressure area (L), the radius or radii of curvature of the convex contour being at least 0.4 x the axial length or width of the annular sealing member (14).

22. A sealing member according to claim 21, wherein the radius or radii of curvature is/are at least 0.6 and preferably about 0.85 x the axial length of the annular sealing member (14).

23. A sealing member according to claim 21 or 22, wherein the convex axial sectional contour of the outer peripheral surface part continuously merges into a concave sectional contour (31) adjacent to the second end surface (30) of the sealing member (14).

24. A sealing member according to claim 23, wherein the convex contour merges into the concave contour at an inflexion spaced from said second end surface (30) by a distance being 0.05 - 0.25 x the total axial length or width of the sealing member (14).

25. A sealing member according to claim 23 or 24, wherein an end part of the sectional contour adjacent to the second end surface (30) of the sealing member (14) and the longitudinal axis (25) of the sealing arrangement define there between an angle of from - 10° to + 45°.

26. A sealing member according to any of the claims 15-25, wherein the annular sealing member (14) and the compression ring (15) are arranged within an annular channel or groove (12), which is formed in the first apparatus part (10) and defines an annular opening opposite to the cylindrical surface of the second apparatus part (13), said channel having a bottom wall for sealingly engaging with the compression ring (15) and opposite first and second side walls (16, 17) positioned opposite to the first and second end surfaces, respectively, of the sealing member (14).

## Patentansprüche

1. Dichtungsanordnung zur Abdichtung eines Zwischenraumes, der sich zwischen Hoch- und Niedrigdruckbereichen (H, L) erstreckt und zwischen einem ersten Geräteteil (10) und einer zylindrischen Fläche eines zweiten Geräteteils (13) gebildet ist, wobei die ersten und zweiten Geräteteile (10, 13) entlang der Achse (25) der zylindrischen Fläche gegeneinander hin- und herbewegbar sind, wobei die Dichtungsanordnung umfasst: ein ringförmiges Dichtungselement (14) aus elastischem Material mit einer radial außenliegenden Umfangsfläche (22, 23), die sich zwischen axial gegenüberliegenden ersten und zweiten Endflächen erstreckt, die den Hoch- und Niedrigdruckbereichen (H, L) entsprechend zugewandt sind, und einer radial innenliegenden Umfangsfläche (18 bis 20) für einen dichtenden Eingriff mit der zylindrischen Fläche des zweiten Geräteteils (13) in einem Kontaktbereich (19), wobei die innere Fläche einen ersten Abschnitt (18), der sich zwischen der ersten Endfläche des Dichtungselementes und dem Kontaktbereich (19) erstreckt, und einen zweiten Abschnitt (20) zur Bildung eines ersten Zwischenraumes mit der zylindrischen Fläche aufweist, welcher sich zwischen dem Kontaktbereich (19) und der zweiten Endfläche (30) des Dichtungselementes (14) erstreckt und vom Kontaktbereich zum Niedrigdruckbereich (L) aufweitet, wobei der erste Abschnitt (18) einen minimalen Durchmesser hat, der im Wesentlichen den maximalen Durchmesser des zweiten Abschnittes (20) übersteigt, wobei der axiale Querschnitt des inneren zweiten Umfangsflächenabschnitts (20) eine konvexe, gerundete Kontur mit einem Krümmungsradius oder Krümmungsradien innerhalb des Bereichs des 0,15- bis 1,5-fachen der gesamten axialen Länge des Dichtungselements (14) bildet und so ausgewählt wird, um die Dichtungseigenschaften des Dichtungselements (14) zu verbessern, und einen ringförmigen Kompressionsring (15), der sich mit der radialen äußeren Umfangsfläche des Dichtungselements (14) in Eingriff befindet, um die innere Umfangsfläche (18 bis 20) des Dichtungselementes (14) in engen Kontakt mit der zylindrischen Fläche des zweiten Geräteteils (13) im Kontaktbereich (19) zu drücken,
**dadurch gekennzeichnet, dass** der axiale Querschnitt von zumindest dem Teil der radialen Außenfläche, der in Kontakt mit dem Kompressionsring (15) gelangt, einen Kontaktabschnitt (22) und einen Entlastungsabschnitt (23) und einen Abschnitt (28) mit einer gerundeten konvexen Kontur zwischen dem Kontaktabschnitt (22) und dem Entlastungsabschnitt (23) aufweist, und mindestens eine der Kontaktoberfläche (22) und des Druckentlastungsabschnitts (23) einen spitzen Winkel mit der Längsachse des Dichtungselements bildet.

2. Dichtungsanordnung nach Anspruch 1, bei welcher das ringförmige Kompressionsmittel einen Kompressionsring (15) aufweist, das sich mit der radial außenliegenden Umfangsfläche des Dichtungselementes (14) in Eingriff befindet.

3. Dichtungsanordnung nach Anspruch 1 oder 2, bei welcher die äußere Umfangsfläche des ringförmigen Dichtungselementes ein konkaves Flächenteil aufweist, das sich mit einem komplementären konvexen Flächenteil des ringförmigen Kompressionsmittels in Eingriff befindet.

4. Dichtungsanordnung nach einem der Ansprüche 1 bis 3, bei welcher der Krümmungsradius oder die Krümmungsradien des zweiten inneren Umfangsflächenabschnittes (20) innerhalb des Bereiches des 0,2- bis 0,6-fachen der gesamten axialen Länge des Dichtungselementes (14) liegt/liegen.

5. Dichtungsanordnung nach Anspruch 4, bei welcher der Krümmungsradius etwa das 0,3-fache der gesamten axialen Länge des Dichtungselementes (14) beträgt.

6. Dichtungsanordnung nach einem der Ansprüche 1 bis 5, bei welcher der Kontaktbereich (19) innerhalb des axialen Längenbereiches des 0,2- bis 0,6-fachen der gesamten axialen Länge des Dichtungselementes (14), gemessen von der zweiten Endfläche (30) an, angeordnet ist.

7. Dichtungsanordnung nach einem der Ansprüche 1 bis 6, bei welcher der axiale Querschnitt des Kontaktbereiches (19) der inneren Umfangsfläche eine konvexe, gerundete Kontur mit einem Krümmungsradius oder -radien innerhalb des Bereiches des 2- bis 5-fachen der gesamten axialen Länge des Dichtungselementes (14) bildet.

8. Dichtungsanordnung nach einem der Ansprüche 1 bis 7, bei welcher der aufgeweitete Raum, der vom zweiten inneren Flächenabschnitt (20) mit der gerundeten Kontur gebildet ist, sich von der zweiten Endfläche (30) entlang einer axialen Länge erstreckt, die das 0,3-fache der gesamten axialen Länge des Dichtungselementes nicht überschreitet.

9. Dichtungsanordnung nach einem der Ansprüche 2 bis 8, bei welcher der axiale Querschnitt mindestens eines Teils der äußeren Umfangsfläche (22 bis 24) des ringförmigen Dichtungselementes (14), der in Kontakt mit dem Kompressionsring (15) gelangt, eine derartige konvexe Kontur bildet, dass in einem unbelastetem Zustand des Dichtungselementes der radiale Abstand zwischen diesem Teil der äußeren Umfangsfläche und dem in radialer Richtung am innersten liegenden Teil der inneren Umfangsfläche in axialer Richtung zu der zweiten Endfläche (30) und dem Niedrigdruckbereich (L) hin abnimmt, wobei der Krümmungsradius oder die Krümmungsradien der konvexen Kontur mindestens das 0,4-fache der gesamten axialen Länge oder Breite des ringförmigen Dichtungselementes beträgt/betragen.

10. Dichtungsanordnung nach Anspruch 9, bei welcher der Krümmungsradius oder die Krümmungsradien mindestens das 0,6- und vorzugsweise das etwa 0,85-fache der gesamten axialen Länge des ringförmigen Dichtungselementes (14) beträgt/betragen.

11. Dichtungsanordnung nach Anspruch 11 oder 10, bei welcher die konvexe axiale Querschnittskontur dos äußeren Umfangsflächenteils mit einer konkaven Querschnittkontur (31) benachbart zur zweiten Endfläche (30) des Dichtungselementes (14) verschmilzt.

12. Dichtungsanordnung nach Anspruch 11, bei welcher die konvexe Kontur mit der konkaven Kontur an einer Biegung verschmilzt, die von der zweiten Endfläche (30) um eine Distanz beabstandet ist, die das 0,05- bis 0,25-fache der gesamten axialen Länge oder Breite des Dichtungselementes (14) beträgt.

13. Dichtungsanordnung nach Anspruch 11 oder 12, bei welcher ein Endteil der Querschnittkontur benachbart zur zweiten Endfläche (30) des Dichtungselementes (14) und die Längsachse (25) der Dichtungsanordnung zwischen sich einen Wickel von -10° bis +24° bilden.

14. Dichtungsanordnung nach einem der Ansprüche 11 bis 13, bei welcher das ringförmige Dichtungselement (14) und der Kompressionsring (15) innerhalb eines ringförmigen Kanals oder einer Nut (12) angeordnet sind, welche(r) im ersten Geräteteil (10) ausgebildet ist und eine ringförmige Öffnung gegenüber der zylindrischen Fläche des zweiten Geräteteils (13) bildet, wobei der Kanal eine Bodenwandung für einen dichtenden Eingriff mit dem Kompressionsring und gegenüberliegende erste und zweite Seitenwände (16, 17), die gegenüber den ersten und zweiten Endflächen des Dichtungselementes (14) entsprechend angeordnet sind, aufweist.

15. Ringförmiges Dichtungselement (14) aus elastischem Material zur Abdichtung eines Zwischenraumes, der sich zwischen Hoch- und Niedrigdruckbereichen (H, L) erstreckt und zwischen einem ersten Geräteteil (10) und einer zylindrischen Fläche eines zweiten Geräteteils (13) gebildet ist, wobei die ersten und zweiten Geräteteile entlang der Achse (25) der zylindrischen Fläche gegeneinander hin- und herbewegbar sind, wobei das Dichtungselement eine radial außenliegende Umfangsfläche (22, 23), die sich zwischen axial gegenüberliegenden ersten und zweiten Endflächen erstreckt, welche den Hoch- und Niedrigdruckbereichen (H, L) entsprechend zugewandt sind, und eine radial innenliegende Umfangsfläche (18 bis 20) für einen dichtenden Eingriff mit der zylindrischen Fläche des zweiten Geräteteils (13) in einem Kontaktbereich (19) aufweist, wobei die Innenfläche einen ersten Abschnitt (18), der sich zwischen der ersten Endfläche des Dichtungselementes und dem Kontaktbereich (19) erstreckt, und einen zweiten Abschnitt (20) zur Bildung eines ersten Zwischenraumes mit der zylindrischen Fläche aufweist, welcher sich zwischen dem Kontaktbereich (19) und der zweiten Endfläche (30) des Dichtungselementes (14) erstreckt und vom Kontaktbereich zum Niedrigdruckbereich (L) aufweitet, wobei der erste Abschnitt (18) einen minimalen Durchmesser aufweist, der im Wesentlichen den maximalen Durchmesser des maximalen Durchmesser des zweiten Abschnittes (20) übersteigt, wobei der axiale Querschnitt des inneren zweiten Umfangsflächenabschnitts (20) eine konvexe, gerundete Kontur mit einem Krümmungsradius oder Krümmungsradien innerhalb des Bereichs des 0,15- bis 1,5-fachen der gesamten axialen Länge des Dichtungselements (14) bildet und so ausgewählt wird, um die Dichtungseigenschaften des Dichtungselements (14) zu verbessern, **dadurch gekennzeichnet, dass** der axiale Querschnitt der radialen Außenfläche eingerichtet ist, um in Kontakt mit einem Kompressionsring (15) zu gelangen, und einen Kontaktabschnitt (22) und einen Entlastungsabschnitt (23) und einen Abschnitt (28) mit einer gerundeten konvexen Kontur zwischen dem Kontaktabschnitt (22) und dem Entlastungsabschnitt (23) aufweist, und mindestens eine der Kontaktoberfläche (22) und des Druckentlastungsabschnitts (23) einen spitzen Winkel mit der Längsachse des Dichtungselements bildet.

16. Dichtungselement nach Anspruch 15, bei welchem der Krümmungsradius oder die Krümmungsradien des zweiten inneren Umfangsflächenabschnittes (20) innerhalb des Bereiches des 0,2- bis 0,6-fachen der gesamten axialen Länge des Dichtungselementes (14) liegt/liegen.

17. Dichtungselement nach Anspruch 16, bei welchem der Krümmungsradius etwa das 0,3-fache der gesamten axialen Länge des Dichtungselementes (14) beträgt.

18. Dichtungselement nach einem der Ansprüche 15 bis 17, bei welchem der Kontaktbereich (19) innerhalb des axialen Längenbereiches des 0,2- bis 0,6-fachen der gesamten axialen Länge des Dichtungselementes (14), gemessen von der zweiten Endfläche (30) an, angeordnet ist.

19. Dichtungselement nach einem der Ansprüche 15 bis 18, bei welchem der axiale Querschnitt des Kontaktbereiches (19) der inneren Umfangsfläche eine konvexe, gerundete Kontur mit einem Krümmungsradius oder -radien innerhalb des Bereiches des 2- bis 5-fachen der gesamten axialen Länge des Dichtungselementes (14) bildet.

20. Dichtungselement nach einem der Ansprüche 15 bis 19, bei welchem der aufgeweitete Zwischenraum, der vom zweiten inneren Flächenabschnitt (20) mit der gerundeten Kontur gebildet ist, sich von der zweiten Endfläche (30) entlang einer axialen Länge erstreckt, die das 0,3-fache der gesamten axialen Länge des Dichtungselementes (14) nicht übersteigt.

21. Dichtungselement nach einem der Ansprüche 15 bis 20, bei welchem der axiale Querschnitt mindestens eines Teils der äußeren Umfangsfläche des ringförmigen Dichtungselementes (14), der ausgebildet ist, um in Kontakt mit einem umgebenden Kompressionsrings (15) zu gelangen, eine derartige konvexe Kontur bildet, dass in einem unbelasteten Zustand des Dichtungselementes die radiale Distanz zwischen diesem Teil der äußeren Umfangsfläche und dem in radialer Richtung im Innersten liegenden Teil der inneren Umfangsfläche in axialer Richtung zu der zweiten Endfläche (30) und dem Niedrigdruckbereich (L) abnimmt, wobei der Krümmungsradius oder die Krümmungsradien der konvexen Kontur mindestens das 0,4-fache der axialen Länge oder Breite des ringförmigen Dichtungselementes (14) beträgt.

22. Dichtungselement nach Anspruch 21, bei welchem der Krümmungsradius oder die Krümmungsradien mindestens das 0,6- und vorzugsweise etwa das 0,85-fache der axialen Länge des ringförmigen Dichtungselementes (14) beträgt/betragen.

23. Dichtungselement nach Anspruch 21 oder 22, bei welchem die konvexe axiale Querschnittskontur des äußeren Umfangsflächenteils kontinuierlich mit einer konkaven Querschnittskontur (31) benachbart zur zweiten Endfläche (30) des Dichtungselementes (14) verschmilzt.

24. Dichtungselement nach Anspruch 23, bei welchem die konvexe Kontur mit der konkaven Kontur an einer Biegung verschmilzt, die von der zweiten Endfläche (30) um eine Distanz beabstandet ist, die das 0,05- bis 0,25-fache der gesamten axialen Länge oder Breite des Dichtungselementes (14) beträgt.

25. Dichtungselement nach Anspruch 23 oder 24, bei welchem ein Endteil der Querschnittkontur benachbart zur zweiten Endfläche (30) des Dichtungselementes (14) und die Längsachse (25) der Dichtungsanordnung zwischen sich einen Winkel von -10° bis +45° bilden.

26. Dichtungselement nach einem der Ansprüche 15 bis 25, bei welchem das ringförmige Dichtungselement (14) und der Kompressionsring (15) innerhalb eines ringförmigen Kanals oder einer Nut (12) angeordnet sind, welche(r) im ersten Geräteteil (10) ausgebildet ist und eine ringförmige Öffnung gegenüber der zylindrischen Fläche des zweiten Geräteteils (13) bildet, wobei der Kanal eine Bodewandung für einen dichtenden Eingriff mit dem Kompressionsring (15) und gegenüberliegende erste und zweite Seitenwände (16, 17), die gegenüber den ersten und zweiten Endflächen des Dichtungselementes (14) entsprechend angeordnet sind, aufweist.

## Revendications

1. Dispositif d'étanchéité permettant d'obturer un espace compris entre des zones sous haute pression et sous basse pression (H, B) et se trouvant entre une première partie d'appareil (10) et une surface cylindrique d'une deuxième partie d'appareil (13), les première et deuxième parties d'appareil (10, 13) étant mutuellement mobiles en va-et-vient le long de l'axe (25) de ladite surface cylindrique, ledit dispositif d'étanchéité comprenant:
un élément annulaire d'étanchéité (14) constitué d'un matériau résilient comportant une surface périphérique externe radiale (22, 23) se trouvant entre les première et seconde surfaces d'extrémité opposées axialement faisant face aux dites zones sous haute pression et sous basse pression (H, B), respectivement, et une surface périphérique interne radiale (18-20) permettant un engagement étanche avec la surface cylindrique de la deuxième partie d'appareil (13) au niveau d'une zone de contact (19), ladite surface interne contenant une première section (18) située entre la première surface d'extrémité de l'élément d'étanchéité et la zone de contact (19) et une seconde section (20), afin de définir avec la surface cylindrique un premier espace compris entre la zone de contact (19) et la seconde surface d'extrémité (30) de l'élément d'étanchéité (14) qui s'élargit en partant de ladite zone de contact en direction de la zone sous basse pression (B), la première section (18) ayant un diamètre minimal dépassant nettement le diamètre maximal de la seconde section, la vue axiale en coupe de ladite section à seconde surface périphérique interne (20) définissant un contour convexe et arrondi dont le rayon ou les rayons de courbure est compris entre 0,15 et 1,5 fois la longueur axiale totale de l'élément d'étanchéité (14) et en ce qu'on le choisit pour améliorer les caractéristiques d'étanchéité de l'élément d'étanchéité (14), et un segment de compression annulaire (15) qui est en engagement avec la surface périphérique externe radiale de l'élément d'étanchéité (14) afin de pousser la surface périphérique interne (18-20) de l'élément d'étanchéité (14) pour qu'elle vienne en contact rapproché avec la surface cylindrique de la deuxième partie d'appareil (13) dans ladite zone de contact (19),
**caractérisé en ce que** la vue axiale en coupe d'au moins la partie de la surface périphérique externe radiale qui vient en contact avec le segment de compression (15) dispose d'une section de contact (22) et d'une section de décharge (23) ainsi que d'une section (28) ayant un contour convexe et arrondi entre la section de contact (22) et la section de décharge (23), et **en ce qu'**au moins l'une des surfaces de contact (22) ou de décharge (23) définit un angle aigu avec l'axe longitudinale de l'élément d'étanchéité.

2. Dispositif d'étanchéité selon la revendication 1, dans lequel le moyen annulaire de compression comprend un segment de compression (15) qui est en engagement avec la surface périphérique externe radiale de l'élément d'étanchéité (14).

3. Dispositif d'étanchéité selon la revendication 1 ou 2, dans lequel la surface périphérique externe de l'élément annulaire d'étanchéité comprend une partie à surface concave s'engageant avec une partie à surface convexe complémentaire du moyen annulaire de compression.

4. Dispositif d'étanchéité selon l'une quelconque des revendications 1 à 3, dans lequel le rayon ou les rayons de courbure de la section à seconde surface périphérique interne (20) se trouve(nt) dans l'intervalle allant de 0,2 à 0,6 fois la longueur axiale totale de l'élément d'étanchéité (14).

5. Dispositif d'étanchéité selon la revendication 4, dans lequel le rayon de courbure est d'à peu près 0,3 fois la longueur axiale totale de l'élément d'étanchéité (14).

6. Dispositif d'étanchéité selon l'une quelconque des revendications 1 à 5, dans lequel la zone de contact (19) se trouve à l'intérieur de l'intervalle de longueur axiale allant de 0,2 à 0,6 fois la longueur axiale totale de l'élément d'étanchéité (14) mesurée à partir de ladite seconde surface d'extrémité (30).

7. Dispositif d'étanchéité selon l'une quelconque des revendications 1 à 6, dans lequel la vue axiale en coupe de la zone de contact (19) de la surface périphérique interne définit un contour convexe et arrondi dont le rayon ou les rayons de courbure se trouvent dans l'intervalle allant de 2 à 5 fois la longueur axiale totale de l'élément d'étanchéité (14).

8. Dispositif d'étanchéité selon l'une quelconque des revendications 1 à 7, dans lequel l'espace d'élargissement défini par la section à seconde surface interne (20) avec le contour arrondi s'étend à partir de la seconde surface d'extrémité (30) sur une longueur axiale n'excédant pas 0,3 fois la longueur axiale totale de l'élément d'étanchéité.

9. Dispositif d'étanchéité selon l'une quelconque des revendications 2 à 8, dans lequel la vue axiale en coupe d'au moins une partie de la surface périphérique externe (22-24) de l'élément annulaire d'étanchéité (14) qui vient en contact avec le segment de compression (15) définit un contour convexe tel que dans un état relâché de l'élément d'étanchéité, la distance radiale entre cette partie de la surface périphérique externe et la partie radiale la plus interne de la surface périphérique interne diminue dans une direction axiale dirigée vers la seconde surface d'extrémité (30) et la zone de basse pression (L), le rayon ou les rayons de courbure du contour convexe étant d'au moins 0,4 fois la longueur ou la largeur axiale totale de l'élément annulaire d'étanchéité.

10. Dispositif d'étanchéité selon la revendication 9, dans lequel le rayon ou les rayons de courbure est (sont) d'au moins 0,6 et de préférence 0,85 fois la longueur axiale totale de l'élément d'étanchéité (14).

11. Dispositif d'étanchéité selon la revendication 9 ou 10, dans lequel le contour convexe axial de coupe de la partie à surface périphérique externe de manière continue et un contour concave de coupe (31) adjacent à la seconde surface d'extrémité (30) de l'élément d'étanchéité (14) se joignent.

12. Dispositif d'étanchéité selon la revendication 11, dans lequel le contour convexe est joint au contour concave au niveau d'une zone d'inflexion espacée de ladite seconde surface d'extrémité (30) d'une distance de 0,05 à 0,25 fois la longueur ou la largeur axiale totale de l'élément d'étanchéité (14).

13. Dispositif d'étanchéité selon la revendication 11 ou 12, dans lequel une partie d'extrémité du contour de coupe adjacent à la seconde surface d'extrémité (30) de l'élément annulaire d'étanchéité (14) et l'axe longitudinal (25) du dispositif d'étanchéité définissent entre eux un angle compris entre -10° et +45°.

14. Dispositif d'étanchéité selon l'une quelconque des revendications 11 à 13, dans lequel l'élément annulaire d'étanchéité (14) et le segment de compression (15) se trouvent dans un canal ou dans une rainure annulaire (12), qui se situe dans la première partie d'appareil (10) et qui définit une ouverture annulaire opposée à la surface cylindrique de la deuxième partie d'appareil (13), ledit canal comportant une paroi de fond, permettant d'engager avec étanchéité le segment de compression, et des première et seconde parois latérales opposées (16, 17), situées de manière opposée par rapport aux première et seconde surfaces d'extrémité, respectivement, de l'élément d'étanchéité (14).

15. Elément annulaire d'étanchéité (14) constitué d'un matériau résilient et destiné à obturer un espace compris entre des zones sous haute pression et sous basse pression (H, B) et se trouvant entre une première partie d'appareil (10) et une surface cylindrique de deuxième partie d'appareil (13), les première et deuxième parties d'appareil étant mutuellement mobiles en va-et-vient le long de l'axe (25) de ladite surface cylindrique, ledit dispositif d'étanchéité comprenant une surface périphérique externe radiale (22, 23) située entre les première et seconde surfaces d'extrémité opposées axialement faisant face aux dites zones sous haute pression et sous basse pression (H, B), respectivement, et une surface périphérique interne radiale (18-20) qui permet l'engagement étanche avec la surface cylindrique dela deuxième partie d'appareil (13) au niveau d'une zone de contact (19), ladite surface interne comportant une première section (18) comprise entre la première surface d'extrémité de l'élément d'étanchéité et la zone de contact (19), et une seconde section (20) permettant de définir avec la surface cylindrique un premier espace compris entre la zone de contact (19) et la seconde surface d'extrémité (30) de l'élément d'étanchéité (14) et s'élargissant à partir de ladite zone de contact en direction de la zone sous basse pression (B), la première section (18) ayant un diamètre minimal excédant nettement le diamètre maximal de la seconde section (20), la vue axiale en coupe de ladite section à seconde surface périphérique interne (20) définissant un contour convexe et arrondi dont le rayon ou les rayons de courbure est compris entre 0,15 et 1,5 fois la longueur axiale totale de l'élément d'étanchéité (14) et en ce qu'on le choisit pour améliorer les caractéristiques d'étanchéité de l'élément d'étanchéité (14),
**caractérisé en ce que** la vue axiale en coupe de la surface périphérique externe radiale est adaptée à venir en contact avec un segment de compression (15) et dispose d'une section de contact (22) et d'une section de décharge (23) ainsi que d'une section (28) ayant un contour convexe et arrondi entre la section de contact (22) et la section de décharge (23), et **en ce qu'**au moins l'une des surfaces de contact (22) ou de décharge (23) définit un angle aigu avec l'axe longitudinale de l'élément d'étanchéité.

16. Elément d'étanchéité selon la revendication 15, dans lequel le rayon ou les rayons de courbure de la section à seconde surface périphérique interne (20) se trouve(nt) dans l'intervalle allant de 0,2 à 0,6 fois la longueur axiale totale de l'élément d'étanchéité (14).

17. Elément d'étanchéité selon la revendication 16, dans lequel le rayon de courbure vaut à peu près 0,3 fois la longueur axiale totale de l'élément d'étanchéité (14).

18. Elément d'étanchéité selon l'une quelconque des revendications 15 à 17, dans lequel la zone de contact (19) se trouve à l'intérieur de l'intervalle de longueur axiale allant de 0,2 à 0,6 fois la longueur axiale totale de l'élément d'étanchéité (14) mesurée à partir de ladite seconde surface d'extrémité (30).

19. Elément d'étanchéité selon l'une quelconque des revendications 15 à 18, dans lequel la vue axiale en coupe de la zone de contact (19) de la surface périphérique interne définit un contour convexe et arrondi dont le rayon ou les rayons de courbure se trouvent dans l'intervalle allant de 2 à 5 fois la longueur axiale totale de l'élément d'étanchéité (14).

20. Elément d'étanchéité selon l'une quelconque des revendications 15 à 19, dans lequel l'espace d'élargissement défini par la section à seconde surface interne (20) avec le contour arrondi part de la seconde surface d'extrémité (30) le long d'une longueur axiale n'excédant pas 0,3 fois la longueur axiale totale de l'élément d'étanchéité (14).

21. Elément d'étanchéité selon l'une quelconque des revendications 15 à 20, dans lequel la vue axiale en coupe d'au moins une partie de la surface périphérique externe de l'élément annulaire d'étanchéité (14) qui vient en contact avec le segment de compression (15) définit un contour convexe tel que dans un état relâché de l'élément d'étanchéité, la distance radiale entre cette partie de la surface périphérique externe et la partie radiale la plus interne de la surface périphérique interne diminue dans une direction axiale dirigée vers la seconde surface d'extrémité (30) et la zone de basse pression (B), le rayon ou les rayons de courbure du contour convexe étant d'au moins 0,4 fois la longueur ou la largeur axiale totale de l'élément annulaire d'étanchéité (14).

22. Elément d'étanchéité selon la revendication 21, dans lequel le rayon ou les rayons de courbure est (sont) d'au moins 0,6 et de préférence 0,85 fois la longueur axiale totale de l'élément d'étanchéité (14).

23. Elément d'étanchéité selon la revendication 21 ou 22, dans lequel le contour convexe axial de coupe de la partie à surface périphérique externe et un contour concave de coupe (31) adjacent à la seconde surface d'extrémité (30) de l'élément d'étanchéité (14) se joigneni de manière continue.

24. Elément d'étanchéité selon la revendication 23, dans lequel le contour convexe et le contour concave se joignent au niveau d'une zone d'inflexion espacée de ladite seconde surface d'extrémité (30) d'une distance valant de 0,05 à 0,25 fois la longueur ou la largeur axiale totale de l'élément d'étanchéité (14).

25. Elément d'étanchéité selon la revendication 23 ou 24, dans lequel une partie d'extrémité du contour de coupe adjacent à la seconde surface d'extrémité (30) de l'élément annulaire d'étanchéité (14) et l'axe longitudinal (25) du dispositif d'étanchéité définissent entre eux un angle compris entre -10° et + 45°.

26. Elément d'étanchéité selon l'une quelconque des revendications 15 à 25, dans lequel l'élément annulaire d'étanchéité (14) et le segment de compression (15) se trouvent dans un canal ou dans une rainure annulaire (12), qui se situe dans la première partie d'appareil (10) et qui définit une ouverture annulaire opposée à la surface cylindrique de la deuxième partie d'appareil (13), ledit canal comportant une paroi de fond destinée à l'engagement du segment de compression (15) et des première et seconde parois latérales opposées (16, 17) situées de manière opposée par rapport aux première et seconde surfaces d'extrémité, respectivement, de l'élément d'étanchéité (14).
